# EUROPEAN PATENT SPECIFICATION

(11) **EP 2 240 841 B1**
(45) Date of publication and mention of the grant of the patent: **11.07.2012**
(21) Application number: 08761115.8
(22) Date of filing: 17.06.2008
(51) Int. Cl.: G06F 3/02, G06F 1/18

(54) **LIGHT CONTROL OF AN ELECTRONIC DEVICE**
LICHTSTEUERUNG EINER ELEKTRONISCHEN EINRICHTUNG
COMMANDE DE LUMIÈRE D'UN DISPOSITIF ÉLECTRONIQUE

(30) Priority: 05.02.2008 US 26265 P; 29.02.2008 US 40438
(43) Date of publication of application: 20.10.2010
(73) Proprietor: Sony Ericsson Mobile Communications AB, 221 88 Lund (SE)
(72) Inventor: JENDBRO, Magnus, S-245 61 Staffanstorp (SE); KLINGHULT, Gunnar, S-223 59 Lund (SE); KLEVERMAN, Mats, S-254 43 Helsingborg (SE)
(74) Representative: VALEA AB
(86) International application number: PCT/EP2008/057628
(87) International publication number: WO 2009/097904

(56) References cited:
- EP-A- 0 564 127
- WO-A-2005/083547
- WO-A-2007/104829
- KR-B1- 100 650 190
- YOSEPH BAR-COHEN: "Industrial Sensing & Measurement. MUSCLING INTO MOTION" [Online] 1 December 2001 (2001-12-01), OEMAGAZINE, , XP007905922 Retrieved from the Internet: URL:http://spie.org/x26550.xml?pf=true> [retrieved on 2008-10-09] the whole document
- CHENG HUANG ET AL: "Electroactive polymer (EAP)-based deformable micromirrors and light-valve technology for MOEMS display and imaging systems" PROCEEDINGS OF THE SPIE - THE INTERNATIONAL SOCIETY FOR OPTICAL ENGINEERING, SPIE, BELLINGHAM, VA; US, vol. 5389, no. 1, 1 January 2004 (2004-01-01), pages 274-285, XP002487375

## Description

### TECHNICAL FIELD

The present invention relates to the field of electronic devices. More particularly, the present invention relates to an electronic device and method for light control of an electronic device.

### BACKGROUND OF THE INVENTION

Many users of a portable electronic device may be interested in using the device in various unfavourable lighting conditions such as e.g. at night time, in rain, dust and fog; or indoors, in shady bars, smoke filled clubs, restaurants etc. It may then be a problem to identify e.g. the keys on the keyboard of the portable electronic device, but also to identify other functionalities of an electronic device such as the mode of the electronic device.

An existing solution to that problem is to provide the portable electronic device with Light Emitting Diods (LEDs). However, if a plurality of LEDs are arranged on top of each other in order to create illumination in a plurality of different colours, this may lead to a bulky design of the portable electronic device, but also to the use of a lot of LEDs and a complex power management situation in order to synchronize the light emitting scheme for the portable electronic device.

A prior art example regarding light control of an electronic device is found in International Patent Application WO 2005/083547A2 which shows a computing device with an active enclosure. The active enclosure is represented by a housing which has an illuminable portion. The illuminable portion is illuminated by light device/s disposed inside the housing. A further prior art example of an apparatus housing which is capable of having various exterior colors is found in European Patent Application EP 0564127 A2. The housing has a transparent substrate as the exterior layer; under the substrate is a layer of switchable light modulating material. A color forming means is in contact or close proximity with the switchable light modulating material and a background creating means provides the alternating color for the visual indication.

Furthermore, a prior art example regarding light control of an electronic device is found in International Patent Application WO 2007/104829 A1 which presents a method for adjustment an aperture for mobile cameras using an electro active material.

Further, it may also be a problem to communicate information to the user without emitting sounds e.g. in zones where such emitted sound from the portable electronic device may be disturbing for the environment, e.g. on a theatre, a concert hall, a meeting or the like. It exist a plurality of information that may be displayed to the user of a portable electronic device such as an indication of the battery status, status report indicating the signal propagation conditions, the time, the date, which mode the device is operating on for the moment, an icon indicating missed calls, incoming messages etc. For example, the receipt of an SMS may cause an icon or a user interface to appear on the display of the portable electronic device.

However, such icons, information and visual indicators occupy valuable display area, and may sometimes be disturbing or even exceedingly annoying to the user, even to an extent where the readability of the display is jeopardized. A cramped display may cause severe visibility problems e.g. in case all or a plurality of the above mentioned events occur simultaneously and may cause misinterpretation or even exclude the disabled or dyslectic user from using the portable electronic device. A possible solution may be to enlarge the display area. However, the modest physical size of contemporary portable electronic devices, which is desirable for reasons of portability, put a limit to the display size.

Therefore, it is a problem with user devices such as portable electronic devices that all notification and information is visualized only on one single display with limited size.

It is also a problem to produce an illumination scheme on a portable electronic device comprising fading in and/or fading out lights and thus create dimmer effects. There is today no convenient way of achieving such illumination effects.

Further, it may be desired to be able to control the illumination of separate keys on the keyboard of a portable electronic device. According to present technology this can be achieved by adding a separate LED for each key, which needs individual control. This adds LEDs and thus also extra costs, volume, weight and complexity to the portable electronic device. It may further be a problem with light leaking between the different keys.

In addition, as competition increases among manufacturers of portable electronic devices, there is a marketing need for new functions and features.

### SUMMARY OF THE INVENTION

The present invention solves the problem of providing an improved mechanism for transferring information to a user.

A first aspect of the present invention is directed towards an electronic device. The electronic device comprises an element which is made of electro active polymer. The electro active polymer element comprises a set of electrodes. Further, the electro active polymer element is arranged to change its volume when a voltage is supplied to the set of electrodes. The change in volume provides a change in luminous transmittance of the electro active polymer element.

A second aspect of the present invention is directed towards a method for creating a light effect in an electronic device. The electronic device comprises an electro active polymer element. The method is characterized by detecting a trigger signal. When a trigger signal has been detected, voltage is supplied to a set of electrodes in the electro active polymer element. Also, the method comprises changing the volume of the electro active polymer element according to the supplied voltage. Thereby also the luminous transmittance of the electro active polymer element is changed, such that a light effect is created.

Thanks to the electro active polymer element comprised within the electronic device, the light control of the electronic device is considerably improved. Thereby information could be transferred to the user visually, without the need of creating a disturbing noise such as e.g. a ring signal. Thus an improved mechanism for transferring information to a user is provided.

The invention has the following advantages. It allows for using less LEDs. Illumination of certain areas and volumes may be made more precisely with reduced light leakage. A smooth and pleasant light control comprising fading in/out lights and creating dimmer effects is achieved. Further, the invention allow the user to read status information more easily, to locate and use a key that is of interest for him/her to use more easily and to provide him/her with feedback of the key.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
- Figure 1: is a block diagram illustrating an embodiment of an electronic device.
- Figure 2A: is a block diagram illustrating an embodiment of an electronic device comprising a volume dividable into two separate volumes by an electro active polymer element.
- Figure 2B: is a block diagram illustrating a section of an embodiment of an electronic device, comprising a contracted electro active polymer element.
- Figure 2C: is a block diagram illustrating a section of an embodiment of an electronic device, comprising an expanded electro active polymer element.
- Figure 3A: is a block diagram illustrating an embodiment of an electronic device.
- Figure 3B: is a block diagram illustrating section of an embodiment of an electronic device.
- Figure 4A: is a block diagram illustrating a contracted electro active polymer element.
- Figure 4B: is a block diagram illustrating an expanded electro active polymer element.
- Figure 5: is a block diagram illustrating an embodiment of a method in an electronic device.

### DETAILED DESCRIPTION OF PREFERRED EMBODIMENTS

The invention is defined as an electronic device and a method which may be put into practice in the embodiments described below. This invention may, however, be embodied in many different forms and should not be construed as limited to the embodiments set forth herein; rather, these embodiments are provided so that this disclosure will be thorough and complete, and will fully convey the scope of the invention to those skilled in the art. It should be understood that there is no intent to limit the present electronic device or method to any of the particular forms disclosed, but on the contrary, the present electronic device and method is to cover all modifications, equivalents, and alternatives falling within the scope of the invention as defined by the claims.

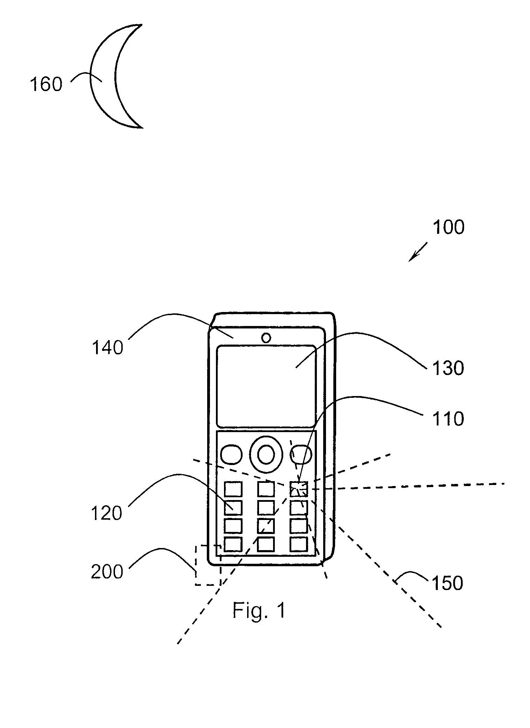

**Figure 1** schematically shows a front view of an electronic device 100 according to some embodiments of the present invention. The electronic device 100 according to the present invention will now be described in relation to a cellular phone, which is a variation of such a device according to some embodiments. The electronic device 100 may however be e.g. a portable communication device of some other type, like a cordless phone, a communication module, a walkie-talkie, a hunting radio, a baby monitor, a radio communications transceiver, a PDA, a laptop, a handheld computer or any other type of portable electronic device 100. The electronic device 100 may in some embodiments be a foldable portable communication device such as a clam shell or foldable knife type cellular phone. The electronic device 100 may, according to some embodiments be somewhat not so very portable and comprise e.g. a stationary computer. It may however as well be any electronic device, including an electronic device not comprising communication ability at all, such as e.g. a gaming machine, a notepad, a music player such as a MP3 player, a camera, a video camera, a flash light, a head-lamp, a navigation device such as a GPS receiver or any other type of electronic device 100.

As used herein, the electronic device 100 may be portable, immovable, transportable, movable, irremovable, stationary, installed in a vehicle, aeronautical, maritime, or land-based, or situated and/or configured to operate locally and/or in a distributed fashion at any other location(s) on earth, under the sea and/or in space. The electronic device 100 as herein described may further be configured for handheld and/or hands-free use.

The electronic device 100 thus has a front side, facing the observer of Figure 1. Also, the electronic device 100 has a back side, opposite to the front side. Further, the electronic device 100 has two front long sides, one to the left of the front and one to the right. The electronic device 100 also has two front short sides, one front short side situated under the front and one front short side over the front. Further yet, the electronic device 100 has a left back long side opposite to the left front long side. Also, the electronic device 100 has a right back long side opposite to the right front long side. Still further, the electronic device 100 has a lower back short side situated opposite to the lower front short side and an upper back short side situated opposite to the upper front short side.

The electronic device 100 may according to some embodiments comprise a display 130. Further, the electronic device 100 is enclosed, at least partly by a housing 140. The housing 140 may according to some embodiments be translucent, and/or even transparent, in its entirety. According to some embodiments, the housing 140 may have some translucent parts while some other parts of the housing 140 may be opaque. Further, according to some embodiments, different parts of the housing 140 may have different degree of transparency.

Thereby, the housing 140, or parts of the housing 140 may be used for displaying information to a user, such as indicating that an SMS has arrived, as in detail will be explained later in this document. Thus information may be displayed to a user without alarming the environment with sound signals.

The housing 140 may include an area where a data input means in the form of e.g. a keypad is provided. When the data input means is touched in an area where a key 110, 120 is provided, information corresponding to this key 110, 120 is registered by the data input means and entered into the electronic device 100. According to the illustrated embodiment, one key 110 is adapted to, at least momentarily, pass out light 150, emitted from a light source situated inside the electronic device 100. Remaining keys 120 are in this illustrated embodiment prevented from passing out light 150. The light 150 is in Figure 1 illustrated by a number of dashed lines, which however is a completely fictitious representation of the light 150. However, thus an illumination may be made in a dark environment e.g. at night time in the faint light from the moon 160.

The keys 110, 120 may have a particular configuration, making the described light effect possible, which particular configuration will be described in all relevant details in the forthcoming text.

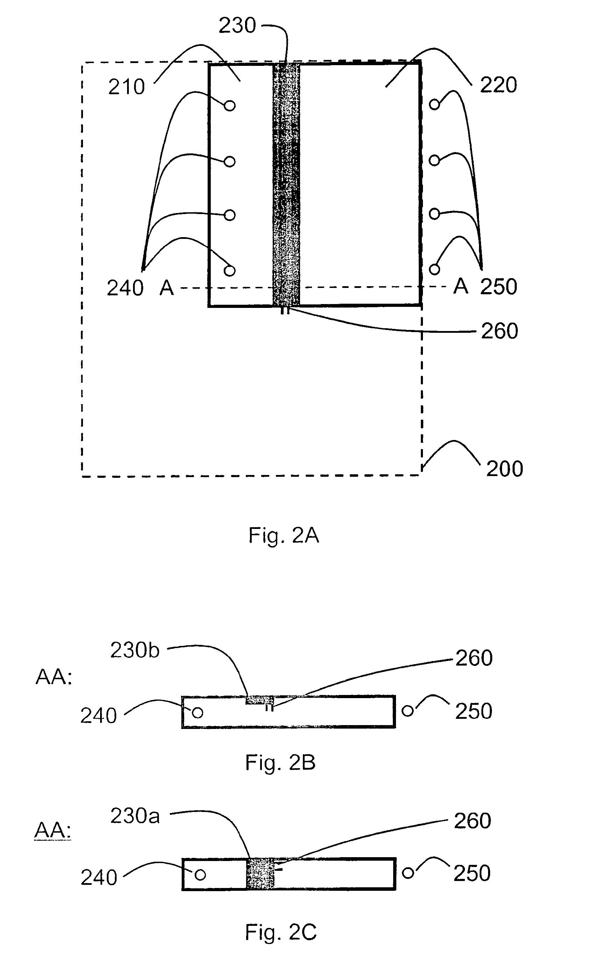

**Figure 2A** illustrates a cross section of a part 200 of the electronic device 100 comprising the housing 140. The illustration in Figure 2A is intended to exemplify the general principles of the present method and device only, and may by no means be regarded as limiting the design of the housing 140 of the electronic device 100, which design is to be limited only by the claims.

For the sake of clarity and in order not to render unnecessary aggravating circumstances for the uninitiated reader to comprehend the present method and device, any internal electronics of the electronic device 100 not necessary for the present method and device has been omitted from the Figures 2A-2C.

The part 200 of the housing 140 may comprise or at least be enlighten by at least one light source 240, 250. Such plurality of light sources 240, 250 may according to some embodiments comprise light sources 240, 250 of different colours. The light source 240, 250 may be a Light-Emitting Diode (LED), an incandescent light bulb, an electric lamp, an arc lamp, a fluorescent light, a high-intensity discharge lamp, an xenon light, a halogen lamp, Electrolum inicent film, flashes or any other convenient source capable of emitting photons, thus creating an artificial light 150 within and/ or outside of the visible spectrum. The emitted light 150 from the light source 240, 250 may according to some embodiments have a wavelength between approximately 400 nm and 750 nm.

However, according to some embodiments, the light source 240, 250 may be adapted to emit light 150 with a wave length outside of the visible spectrum, such as e.g. infra red light 150 or even ultra violet light 150. In some embodiments, the light source 240, 250 is adapted to emit infra red light 150 with a wave length between approximately 750 nm and 1 mm. In some embodiments, the light source 240, 250 is adapted to emit ultra violet light 150 with wave length between approximately 10 nm and 400 nm. Different light sources 240, 250 comprised within the electronic device 100 may be adapted to emit light 150 with wave length outside of the visible spectrum, but with different wave lengths, such as infra red light 150 and ultra violet light 150. Further, according to some embodiments, the electronic device 100 may comprise some light sources 240, 250 adapted to emit visible light 150 with different wave lengths of the emitted light 150, such that they emit light 150 with different colours, e.g. red and/ or blue. According to some further embodiments, some light sources 240, 250 may be adapted to emit infra red light 150 and some light sources 240, 250 may be adapted to emit ultra violet light 150 and/or light 150 within the visible spectrum. According to some embodiments, the electronic device 100 may comprise light sources 240, 250 adapted to change the wave length of the emitted light 150, such that the user may switch between letting the light sources 240, 250 emit light 150 with different wave lengths, and therefore having different colours.

An advantage of using LED as light sources 240, 250 for emitting light 150 may be that they are relatively cheap, consume a modest amount of power and they are robust in comparison with at least some other light sources 240, 250. Also, LEDs in general have a relatively long life time. The fact that a LED flash operates from a low voltage supply is also important, since this may reduce the space required for implementation. This may be an advantage in particular for portable implementations.

Further, the part 200 of the housing 140 may be dividable into a plurality of separate translucent parts 210, 220, such as at least two separate translucent parts 210, 220 by an electro active polymer element 230. The at least two separate translucent parts 210, 220 may be seen as two volumes comprised within the housing 140. The surface, or at least the front surface, of the at least two separate translucent parts 210, 220 may comprise an at least partly translucent and/or transparent elastic or non elastic shielding layer, having an upper side facing the exterior of the electronic device 100. This layer may be flexible and may be provided through e.g. silicone. However, the at least two separate translucent parts 210, 220 may comprise a solid material layer which may be made of a solid plastics material like e.g. Poly Ethylene Therephthalate (PET), or any other amorphous thermoplastic polymer.

The electro active polymer element 230 may be represented by an ionic electro active polymer such as an Ionic Polymer Gel. However the electro active polymer element 230 may also/instead comprise an lonomeric Polymer-Metal Composite or Carbon Nanotubes. The electro active polymer element 230 may according to some embodiments be represented by comprise a dielectric electro active polymer.

The electro active polymer element 230 comprises a set of electrodes 260. The electro active polymer element 230 is arranged to adjust its volume when a voltage is supplied to the set of electrodes 260. The volume of the electro active polymer element 230 may vary when voltage is supplied to the set of electrodes 260, such that the electro active polymer element 230 may expand in volume when voltage is supplied to the set of electrodes 260. According to some other embodiments, the electro active polymer element 230 may contract; shrink in volume, when voltage is supplied to the set of electrodes 260.

The set of electrodes 260 may comprise e.g. two electrodes, such as a first electrode and a second electrode, where the first electrode may be connected to one of the sides of the electro active polymer element 230, while the second electrode may be connected e.g. to a second opposing wall. By applying a voltage between these two electrodes 260, the electro active polymer element 230 reacts and changes its shape.

According to some embodiments, the electro active polymer element 230 expands in size when a voltage is supplied to the electrodes 260. According to some embodiments, the electro active polymer element 230 contract in size when a voltage is supplied to the electrodes 260.

When no more voltage is supplied to the set of electrodes 260, the electro active polymer element 230 return to the shape and size it had originally, before voltage was supplied to the set of electrodes 260.

The change in volume of the electro active polymer element 230 provides a change in luminous transmittance of the electro active polymer element 230. The luminous transmittance of the electro active polymer element 230 thus may vary from opaque to completely translucent. The electro active polymer element 230 may thus according to some embodiments be used for letting light emit from one translucent part 210 of the housing 140, without light leakage from another translucent part 220 of the housing 140. However, according to some embodiments, the electro active polymer element 230 may be used for fading out light emitted e.g. from one translucent part 210 of the housing 140 and fading in light emitted e.g. from another translucent part 220 of the housing 140.

Also, according to some embodiments, the voltage supplied to the set of electrodes 260 may be arranged to vary continuously. This variation in voltage may result in a continuously increased or decreased volume of the electro active polymer element 230. Thus the luminous transmittance of the electro active polymer element 230 varies correspondingly, resulting in a fading effect of the light emitted from the light source 240, 250. It may also result in a fluctuating light flow 150, resulting in a blinking effect such as e.g. a stroboscopic effect.

**Figure 2B** illustrates a cross section A-A of the part 200 of the housing 140 depicted in Figure 2A. The electro active polymer element 230b is, according to the illustrated embodiment, contracted in volume, due to a certain voltage supplied to the set of electrodes 260 of the electro active polymer element 230b. Thus light 150 from the light sources 240, 250 may flow unimpeded between the first translucent part 210 and the second translucent part 220.

**Figure 2C** also illustrates a cross section A-A of the part 200 of the housing 140 depicted in Figure 2A. The electro active polymer element 230a is according to the illustrated embodiment expanded in volume, due to a certain voltage supplied to the set of electrodes 260 of the electro active polymer element 230a. Thus light 150 from the light source 240 is separated from the light 150 from the light source 250, such that e.g. light 150 with one colour may be emitted from the first translucent part 210 and light 150 with another colour may be emitted from the second translucent part 210.

Thus the light emitted from the discussed part 200 of the housing may be controlled in a convenient way, in accordance with the present method and arrangement.

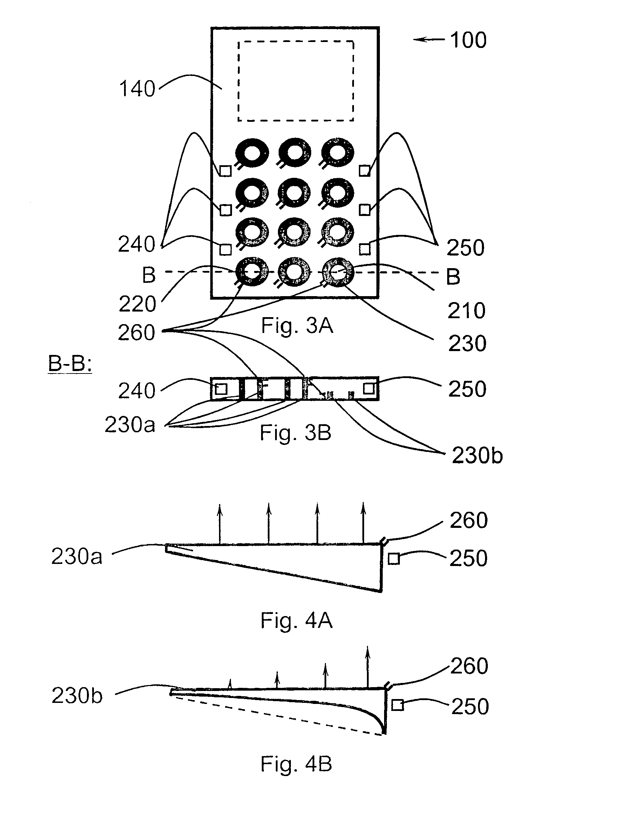

**Figure 3A** schematically illustrates an embodiment of the electronic device 100 comprising a housing 140. The housing 140 may comprise or at least be enlighten by at least one light source 240, 250. The at least one light source 240, 250 may be situated on the inside of the housing 140. Further, the housing 140, comprised within the electronic device 100 may be dividable into a plurality of separate translucent parts 210, 220 by separated electro active polymer elements 230. The separate translucent parts 210, 220 may be e.g. translucent keys on a keyboard of the electronic device 100. However, according to some embodiments, the separate translucent parts 210, 220 may be e.g. translucent areas on the housing 140.

In order to provide an example of use of the electro active polymer according to the present invention, reference is now being made to **Figure 3B**, which illustrates an embodiment of a cross- section B-B of the electronic device 100 in Figure 3A.

Thus Figure 3B illustrates the cross- section B-B of three separate translucent parts 210, 220, separated by three electro active polymer elements 230. Two of the electro active polymer elements 230a are expanded in volume and the electro active polymer element 230b is contracted in volume. Thus light emitted from the light source 240 and/ or the light source 250 may be emitted from the translucent surface of the translucent part 210.

**Figure 4a** illustrates an electro active polymer element 230a in expanded mode. The electro active polymer element 230a is translucent, and let pass light emitted from a light source 250. Light is emitted from a translucent surface of the electro active polymer element 230a, even and smoothly over the entire translucent surface, as illustrated by the length of the arrows in Figure 4A.

**Figure 4b** is illustrating an electro active polymer element 230b in contracted mode. The translucent electro active polymer element 230b let pass light emitted from a light source 250. However, due to the contracted shape of the electro active polymer element 230b, the light is not evenly distributed over the translucent surface of the electro active polymer element 230b, which may be used to create light effects, such as e.g. fading in/out the light emitted from the electro active polymer element 230. This is illustrated by the different length of the arrows in Figure 4B. When the electro active polymer element 230b is contracted, the density of the electro active polymer element 230 is increased. Thereby the translucent ability of the electro active polymer element 230 is decreased, which creates the dim effect.

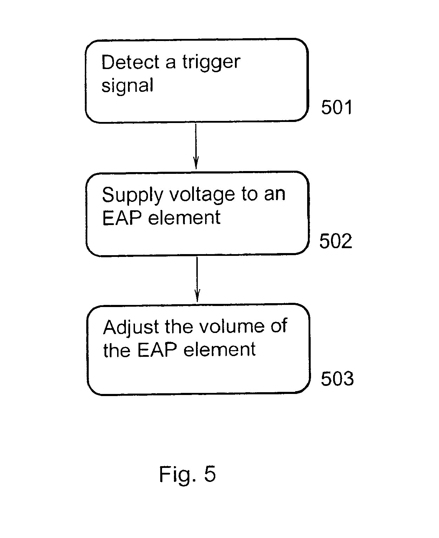

**Figure 5** illustrates a method for creating a light effect in an electronic device 100. The electronic device 100 comprises an electro active polymer element 230. The method comprises detecting a trigger signal. The method further comprises supplying a voltage to a set of electrodes 260 in the electro active polymer element 230 when the trigger signal is detected. Further, the method comprises adjusting the volume of the electro active polymer element 230, according to the supplied voltage. As the volume of the electro active polymer element 230 is adjusted, the luminous transmittance of the electro active polymer element 230 is also adjusted correspondingly, such that a light effect is created.

The thus created light effect may be e.g. fading in/ out light, fading light from one translucent part 210 to another translucent part 220 etc. The light effect may comprise shifting from emitting light from different translucent parts 210, 220 such that a walking light effect is created. The light effect may also comprise e.g. to illuminate the keys of a telephone number that is calling or that the user intends to call. The light effect may according to some embodiments be to emit light such that a flash light functionality is achieved. The light effect may be activated for signalling or calling the attention of the user, e.g. when an incoming telephone call or message, such as an SMS message is arriving. The light effect may according to some embodiments be to illuminate a certain part of the electronic device 100 in order to indicate to a user the mode of the electronic device 100, such as e.g. mute mode, camera mode etc.

To appropriately create a light effect in the electronic device 100, the method may comprise a number of steps 501-503. It is however to be noted that some of the described method steps are optional and only comprised within some embodiments. Further, it is to be noted that the method steps 501-503 may be performed in any arbitrary chronological order and that some of them, e.g. step 501 and step 503, or even all steps may be performed simultaneously or in an altered, arbitrarily rearranged or even completely reversed chronological order. The method may comprise the following steps:

### Step 501

A trigger signal is received and detected. The detection of a trigger signal indicates when and how voltage is to be supplied to the set of electrodes 260 in the electro active polymer element 230. The trigger signal may be generated when an action associated with a certain light scheme is triggered, such as e.g. an SMS is received or the user activates the camera function of the electronic device 100.

### Step 502

Voltage is supplied to the set of electrodes 260 in the electro active polymer element 230. The voltage may be supplied from a voltage source such as e.g. a battery comprised within the electronic device 100. Further, according to some embodiments, voltage may be supplied to a light source 240, 250 within the housing 140.

### Step 503

The volume of the electro active polymer element 230 is adjusted, according to the supplied voltage. The volume of the electro active polymer element 230 may according to some embodiments increase when voltage is supplied to the set of electrodes 260 of the electro active polymer element 230. However, according to some embodiments, the volume of the electro active polymer element 230 may according to some other embodiments decrease when voltage is supplied to the set of electrodes 260 of the electro active polymer element 230. The luminous transmittance of the electro active polymer element 230 is adjusted, such that a light effect is created, as previously described.

### Computer program

The method for method for creating a light effect in an electronic device 100 according to the present method may be implemented through one or more processors (not shown) in the electronic device 100, together with computer program code for performing the functions of the method. The program code mentioned above may also be provided as a computer program product, for instance in the form of a data carrier carrying computer program code for performing the method according to the present invention when being loaded into the processor unit. The data carrier may be a CD ROM disc, a memory stick, or any other appropriate medium such as a disk or tape that can hold machine readable data. The computer program code can furthermore be provided as pure program code on a server and downloaded to the electronic device 100 remotely.

Thus a computer program comprising instruction sets for performing the method according to steps 501-503 may be used for implementing the previously described method.

As will be appreciated by one of skill in the art, the present invention may be embodied as a electronic device 100, a method or a computer program product. Accordingly, the present invention may take the form of an entirely hardware embodiment, a software embodiment or an embodiment combining software and hardware aspects all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in any arbitrary object oriented programming language such as Java®, Smalltalk or C++. However, the computer program code for carrying out the steps of the present method may also be written in any conventional procedural programming languages, such as the "C" programming language and/or a lower level assembler language. The program code may execute entirely on the user's electronic device 100, partly on the user's electronic device 100, as a stand-alone software package, partly on the user's electronic device 100 and partly on a remote computing device or entirely on the remote computing device. In the latter scenario, the remote computing device may be connected to the user's electronic device 100 through a local area network (LAN) or a wide area network (WAN), or the connection may be made to an external computer, for example, through the Internet using an Internet Service Provider.

Furthermore, the present method was described in part above with reference to flowchart illustrations and/or block diagrams of electronic device 100, methods, and computer program products according to embodiments of the invention. It will be understood that each block of the flowchart illustrations and/or block diagrams, and combinations of blocks in the flowchart illustrations and/or block diagrams, may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

### Some applications of the invention

In this way, light emitted from a certain key 210 may be provided, which enables a user to more easily locate and use the key 210 that is of interest for him/her to use. This is of advantage in keypads that are small and where the number of different keys 210, 220 is many. The user may also be provided with feedback of the key 210, such that light is emitted from a key 210 which is depressed by the user, instead of a conventional feedback "beep". This may be an advantage e.g. for people with hearing disability, who might use the keyboard for composing messages such as e.g. Short Message Service (SMS) or e-mail.

However, the described light effect may be used also e.g. in order to illuminate keys 210, 220 on the keyboard that the user may select to make a choice from, at a certain moment. Further, the invention may be used for creating illumination effects and communicating e.g. status information to a user. As an example, a circular zone surrounding a camera lens may be illuminated when the camera function of the electronic device 100 is activated, in case the electronic device 100 comprises camera functionality.

A part of the cover of the electronic device 100 or even the whole cover may be illuminated, continuously or twinkling in a stroboscopic way, when a telephone call or SMS is received.

According to some embodiments, status information concerning e.g. battery load time or status, signal reception conditions etc may be indicated by illuminating at least a part of the covering of the electronic device 100. Light in different colours may communicate different status information, such that a red light means low battery low, yellow means not so very good battery load and green means good battery load. In that way the battery status may be interpreted and properly comprehended even by e.g. elderly people or children.

According to some embodiments, the invention may be used for realising different game applications, e.g. by briefly illuminating one key at the time on the keyboard in a random sequence. The user has to hit the key before the light goes out in order to get a point. The user who gets most points win.

According to some embodiments, the electronic device 100 may be used as a life saving device in an emergency situation. By illuminating all volumes possible to illuminate on the electronic device 100, continuously, or twinkling in a stroboscopic way, the attention of e.g. a rescue vehicle in an emergency situation at night time may be captured.

The terminology used in the detailed description of the particular exemplary embodiments illustrated in the accompanying drawings is not intended to be limiting of the invention. In the drawings, like numbers refer to like elements.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

## Claims

1. Electronic device (100), comprising a housing (140), which housing (140) encloses at least a first translucent part (210) and a second translucent part (220), the electronic device (100), further comprising an element (230) situated between the first translucent part (210) and the second translucent part (220), which element (230) comprises a set of electrodes (260) and is adapted to change the luminous transmittance of light propagating between the first translucent part (210) and the second translucent part (220) when voltage is supplied to the set of electrodes (260), the electronic device being **characterized in that**:
the element (230) is made of electro active polymer, which electro active polymer element (230) is arranged to change its volume when a voltage is supplied to the set of electrodes (260), which change in volume provides a change in luminous transmittance of the electro active polymer element (230), and wherein the electro active polymer element (230) is arranged principally perpendicular to the surface of the housing (140).

2. Electronic device (100) according to claim 1, further comprising:
a light source (240, 250).

3. Electronic device (100) according to any of the claims 1-2, wherein the voltage supplied to the set of electrodes (260) is arranged to vary continuously, resulting in a continuously increased or decreased volume of the electro active polymer element (230), such that the luminous transmittance of the electro active polymer element (230) vary correspondingly, resulting in a fading effect of the light emitted from the light source (240, 250).

4. Electronic device (100) according to claim 1, wherein the housing (140) encloses a plurality of translucent parts (210, 220) and a plurality electro active polymer elements (230) situated between at least some of the translucent parts (210, 220), wherein the electro active polymer elements (230) are adapted to change the luminous transmittance of light propagating between the plurality of translucent parts (210, 220), when voltage is supplied to the set of electrodes (260), such that an effect of light fading from one translucent part (210) to at least another translucent part (220) is created.

5. Electronic device (100) according to any of the claims 1-4, wherein the electro active polymer is an ionic electro active polymer.

6. Electronic device (100) according to any of the claims 1-5, wherein the electronic device (100) is a portable communication device (100).

7. Portable communication device (100) according to claim 6, wherein the portable communication device (100) is represented by a cellular phone.

8. A Method for creating a light effect in an electronic device (100) according to claim 1, the method comprising the steps of:
*detecting* (501) a trigger signal,
*supplying* (502) a voltage to the set of electrodes (260) in the electro active polymer element (230) when the trigger signal is detected, and
*changing* (503) the volume of the electro active polymer element (230), according to the supplied voltage.

## Patentansprüche

1. Elektronische Einrichtung (100) ein Gehäuse (140) umfassend, wobei dieses Gehäuse (140) mindestens ein erstes lichtdurchlässiges Teil (210) und ein zweites lichtdurchlässiges Teil (220) einfasst, wobei die elektronische Vorrichtung (100) weiterhin ein Element (230) umfasst, welches sich zwischen dem ersten lichtdurchlässigen Teil (210) und dem zweiten lichtdurchlässigen Teil (220) befindet, wobei dieses Element (230) einen Satz Elektroden (260) umfasst und eingerichtet ist, um den Lichttransmissionsgrad von Licht, das zwischen dem ersten lichtdurchlässigen Teil (210) und dem zweiten lichtdurchlässigen Teil (220) propagiert, zu ändern, wenn eine Spannung auf den Satz Elektroden (260) angewendet wird, wobei die elektronische Einrichtung dadurch charakterisiert ist, dass:
das Element (230) aus elektroaktivem Polymer gemacht ist, wobei dieses elektroaktive Polymerelement (230) angeordnet ist, um sein Volumen zu ändern, wenn eine Spannung auf den Satz Elektroden (260) angewendet wird, wobei diese Änderung im Volumen eine Änderung des Lichttransmissionsgrades des elektroaktiven Polymerelements (230) bereitstellt, und wobei das elektroaktive Polymerelement (230) angeordnet ist, um hauptsächlich senkrecht zu der Oberfläche des Gehäuses (140) zu sein.

2. Elektronische Einrichtung (100) nach Anspruch 1, weiterhin umfassend:
eine Lichtquelle (240, 250).

3. Elektronische Einrichtung (100) nach einem der Ansprüche 1-2, wobei die Spannung, die auf den Satz Elektroden (260) angewendet ist, angeordnet ist, um kontinuierlich zu variieren, was in einem kontinuierlich vergrößerten oder verkleinerten Volumen des elektroaktiven Polymerelements (230) resultiert, sodass der Lichttransmissionsgrad des elektroaktiven Polymerelements (230) entsprechend variiert, was in einem Abklingeffekt des Lichtes, das aus der Lichtquelle (240, 250) emittiert wird, resultiert.

4. Elektronische Einrichtung (100) nach Anspruch 1, wobei das Gehäuse (140) eine Vielzahl von lichtdurchlässigen Teilen (210, 220) und eine Vielzahl von elektroaktiven Polymerelementen (230), die sich zwischen mindestens einigen der lichtdurchlässigen Teile (210, 220) befinden, einfasst, wobei die elektroaktiven Polymerelemente (230) eingerichtet sind, um den Lichttransmissionsgrad von Licht, das zwischen der Vielzahl von lichtdurchlässigen Teilen (210, 220) propagiert, zu ändern, wenn Spannung auf den Satz Elektroden (260) angewendet wird, sodass ein Effekt eines Lichtabklingens von einem lichtdurchlässigen Teil (210) zu mindestens einem weiteren lichtdurchlässigen Teil (220) erzeugt wird.

5. Elektronische Einrichtung (100) nach einem der Ansprüche 1-4, wobei das elektroaktive Polymer ein ionisches elektroaktives Polymer ist.

6. Elektronische Einrichtung (100) nach einem der Ansprüche 1-5, wobei die elektronische Einrichtung (100) eine tragbare Kommunikationseinrichtung (100) ist.

7. Tragbare Kommunikationseinrichtung (100) nach Anspruch 6, wobei die tragbare Kommunikationseinrichtung (100) durch ein Mobiltelefon verkörpert wird.

8. Verfahren zum Erzeugen eines Lichteffekts in einer elektronischen Einrichtung (100) nach Anspruch 1,
wobei das Verfahren die Schritte umfasst:
Detektieren (501) eines Triggersignals,
Anwenden (502) einer Spannung auf den Satz Elektroden (260) in dem elektroaktiven Polymerelement (230), wenn das Triggersignal detektiert wird, und
Ändern (503) des Volumens des elektroaktiven Polymerelements (230) gemäß der bereitgestellten Spannung.

## Revendications

1. Dispositif électronique (100), comprenant un boîtier (140) qui entoure au moins une première partie translucide (210) et une seconde partie translucide (220), le dispositif électronique (100) comprenant en outre un élément (230) situé entre la première partie translucide (210) et la seconde partie translucide (220), lequel élément (230) comprend un ensemble d'électrodes (260) et est conçu pour modifier le facteur de transmission lumineuse de la lumière se propageant entre la première partie translucide (210) et la seconde partie translucide (220) lorsqu'une tension est alimentée à l'ensemble d'électrodes (260), le dispositif électronique étant **caractérisé en ce que** :
l'élément (230) est réalisé en un polymère électroactif, lequel élément de polymère électroactif (230) est agencé de manière à modifier son volume lorsqu'une tension est alimentée à l'ensemble d'électrodes (260), ce changement en volume fournit un changement dans le facteur de transmission lumineuse de l'élément de polymère électroactif (230), et l'élément de polymère électroactif (230) étant essentiellement agencé de façon à être perpendiculaire à la surface du boîtier (140).

2. Dispositif électronique (100) selon la revendication 1, comprenant en outre :
une source de lumière (240, 250).

3. Dispositif électronique (100) selon l'une des revendications 1 et 2, dans lequel la tension alimentée à l'ensemble d'électrodes (260) est agencée de manière à varier en continu, résultant en un volume augmenté ou diminué en continu de l'élément de polymère électroactif (230), de sorte que le facteur de transmission lumineuse de l'élément de polymère électroactif (230) varie de façon correspondante, produisant un effet d'évanouissement de la lumière émise par la source lumineuse (240, 250).

4. Dispositif électronique (100) selon la revendication 1, dans lequel le boîtier (140) entoure une pluralité de parties translucides (210, 220) et une pluralité d'éléments de polymère électroactif (230) situés entre au moins certaines des parties translucides (210, 220), dans lequel les éléments de polymère électroactif (230) sont conçus pour modifier le facteur de transmission lumineuse de la lumière se propageant entre la pluralité de parties translucides (210, 220), lorsqu'une tension est alimentée à l'ensemble d'électrodes (260), de sorte à créer un effet d'évanouissement de la lumière d'une partie translucide (210) à au moins une autre partie translucide (220).

5. Dispositif électronique (100) selon l'une des revendications 1 à 4, dans lequel le polymère électroactif est un polymère électroactif ionique.

6. Dispositif électronique (100) selon l'une des revendications 1 à 5, le dispositif électronique (100) étant un dispositif de communication portable (100),

7. Dispositif de communication portable (100) selon la revendication 6, le dispositif de communication portable (100) étant représenté par un téléphone cellulaire.

8. Procédé destiné à créer un effet de lumière dans un dispositif électronique (100) selon la revendication 1, le procédé comprenant les étapes consistant :
à détecter (501) un signal de déclenchement,
à alimenter (502) une tension à l'ensemble d'électrodes (260) dans l'élément de polymère électroactif (230) lorsque le signal de déclenchement est détecté, et
à modifier (503) le volume de l'élément polymère électroactif (230), conformément à la tension alimentée.
